# EUROPÄISCHE PATENTSCHRIFT

(11) **EP 3 727 981 B1**
(45) Veröffentlichungstag und Bekanntmachung des Hinweises auf die Patenterteilung: **27.03.2024**
(21) Anmeldenummer: 18830247.5
(22) Anmeldetag: 19.12.2018
(51) Int. Cl.: B60W 50/00, B60W 50/02, B60W 50/035, B60W 30/182, G01C 21/34

(54) **VERFAHREN ZUR DURCHFÜHRUNG EINER EIGENDIAGNOSE BEI EINEM AUTONOMEN FAHRZEUG**
METHOD FOR CARRYING OUT A SELF-DIAGNOSIS IN AN AUTOMATED VEHICLE
PROCÉDÉ POUR EFFECTUER UN AUTO-DIAGNOSTIC DANS UN VÉHICULE AUTONOME

(30) Priorität: 19.12.2017 DE 102017130549
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: SCHIEMENZ, Richard, 38550 Isenbüttel (DE)
(74) Vertreter: Bals & Vogel Patentanwälte PartGmbB
(86) Internationale Anmeldenummer: PCT/EP2018/085978
(87) Internationale Veröffentlichungsnummer: WO 2019/122007

(56) Entgegenhaltungen:
- DE-A1-102009 028 374
- DE-A1-102015 002 913
- DE-A1-102015 225 152
- US-A1- 2017 282 817

## Beschreibung

Die vorliegende Erfindung betrifft ein Verfahren zur Durchführung einer Eigendiagnose bei einem autonomen Fahrzeug. Ferner bezieht sich die Erfindung auf ein autonomes Fahrzeug. Aus dem Stand der Technik sind Fahrzeuge bekannt, bei welchen Diagnoseverfahren zum Erkennen von Fehlerzuständen durchgeführt werden. Für die Erhebung von gezielten Diagnosedaten ist es dabei erforderlich, dass das Fahrzeug unter Einhaltung bestimmter Randbedingungen fährt. Hierbei ist allerdings oft ein Problem, dass die Einflussnahme auf die Randbedingungen nur begrenzt ist. Weiter ist die Durchführung eines derartigen Diagnoseverfahrens oft zeitlich und technisch aufwendig. Die US 2017/282 817 A offenbart ein autonomes Fahrzeug mit Eigendiagnosen.

Aus der DE 10 2016 220 670 A1 ist ein Verfahren und ein System zum Testen von Software für autonome Fahrzeuge bekannt.

Aus der DE 10 2016 109 651 A1 geht ein Verfahren für die Validierung von wenigstens einer Fahrzeugfunktion eines virtuellen autonomen Fahrzeuges hervor.

Es ist eine Aufgabe der vorliegenden Erfindung, die voranstehend beschriebenen Nachteile zumindest teilweise zu beheben. Insbesondere ist es eine Aufgabe, die Durchführung einer Diagnose bei einem Fahrzeug zuverlässiger und/oder mit reduzierten Einschränkungen für den normalen Betrieb zu ermöglichen.

Die voranstehende Aufgabe wird gelöst durch ein Verfahren mit den Merkmalen des Anspruchs 1 und durch ein autonomes Fahrzeug mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen autonomen Fahrzeug, und jeweils umgekehrt, so dass bzgl. der Offenbarung zu den einzelnen Erfindungsaspekten stets wechselseitig Bezug genommen wird bzw. werden kann.

Die Aufgabe wird insbesondere gelöst durch ein Verfahren zur Durchführung einer Eigendiagnose eines autonomen Fahrzeuges. Unter der Eigendiagnose wird dabei vorteilhafterweise die Durchführung zumindest eines Teils eines vollständigen Diagnoseverfahrens zur Diagnose von Fehlern bei dem Fahrzeug verstanden, wobei sich "Eigen-" insbesondere darauf bezieht, dass das Fahrzeug zumindest teilweise selbst die für die Diagnose notwendigen Maßnahmen, wie Messungen, durchführt oder die Diagnose vollständig selbst durchführt. Die Eigendiagnose kann dabei z. B. die Ermittlung von Messwerten bei dem Fahrzeug (und durch das Fahrzeug) umfassen, welche dann extern vom Fahrzeug ausgewertet werden, um die vollständige Diagnose abzuschließen. Auch kann es möglich sein, dass das Fahrzeug selbst die Auswertung durchführt.

Hierbei ist vorgesehen, dass die nachfolgenden Schritte durchgeführt werden, vorzugsweise nacheinander oder in beliebiger Reihenfolge, wobei einzelne Schritte auch wiederholt durchgeführt werden können:
- Betreiben des Fahrzeuges gemäß einer Standardbetriebsart für einen transportorientierten Betrieb des Fahrzeuges, bei welcher die Eigendiagnose gemäß einer ersten Gewichtung, insbesondere vollständig, automatisiert durchgeführt wird,
- Betreiben des Fahrzeuges gemäß einer Diagnosebetriebsart, bei welcher die Eigendiagnose mit einer zweiten Gewichtung, insbesondere vollständig, automatisiert durchgeführt wird, wobei die zweite Gewichtung höher ist als die erste Gewichtung.

Die Nutzung einer Betriebsart speziell zur Diagnose beim Fahrzeug hat den Vorteil, dass in der Standardbetriebsart ohne gravierende Beschränkung der Einsatzfähigkeit des Fahrzeuges nur untergeordnet die Eigendiagnose durchgeführt werden kann, wohingegen nur im Ausnahmefall die Eigendiagnose mit hoher Priorität, und somit zuverlässiger, in der Diagnosebetriebsart durchgeführt werden kann, bspw. im Vorfeld einer Werkstattuntersuchung oder dergleichen. Die Gewichtung bezieht sich somit erfindungsgemäß auf eine Priorität und/oder auf einen Umfang der Eigendiagnose und/oder auf eine Berechtigung, welche der Eigendiagnose hinsichtlich der Beeinflussung des Fahrbetriebs zukommt. Die erste Gewichtung unterscheidet sich dabei derart von der zweiten Gewichtung, dass in der Standardbetriebsart der transportorientierte Betrieb Vorrang hat und/oder nicht eingeschränkt wird, und in der Diagnosebetriebsart der transportorientierte Betrieb nur in der Weise durchgeführt werden kann, dass die Eigendiagnose möglich ist.

Von Vorteil ist es ferner bei dem erfindungsgemäßen Verfahren, wenn der transportorientierte Betrieb einen Betrieb des Fahrzeuges bezeichnet, bei welchem das Fahrzeug (insbesondere autonom, also selbstständig fahrend ohne aktives Steuern und/oder Fahren durch einen Fahrer) einen Transport von wenigstens einem Insassen und/oder wenigstens einer Ladung durchführt. Insbesondere umfasst dabei der transportorientierte Betrieb die Bestimmung einer Route, also einem Weg zwischen einem Startort und einem Zielort zur Zielführung. Diese kann bspw. durch ein Navigationssystem des Fahrzeuges ermittelt werden, optional in Abhängigkeit von der aktuellen Betriebsart.

Die Eigendiagnose kann dabei wenigstens eine Systemprüfung aufweisen, um so den Zustand des Fahrzeuges (detailliert) zu erfassen und/oder zu analysieren. Aus diesen Informationen lässt sich z. B. ableiten, ob es erforderlich ist, einzelne Bauteile des Fahrzeuges in absehbarer Zeit aufgrund von Verschleiß auszutauschen. Ein Vorteil der Diagnosebetriebsart kann dabei sein, dass (ähnlich einer regelmäßigen Wartung oder Inspektion) Prüfungsarbeiten von der Werkstatt auf das Fahrzeug ausgelagert werden können, wodurch sich der personelle Arbeitsaufwand in der Werkstatt verringern kann. Im Falle eines unspezifischen Defekts kann in der Diagnosebetriebsart (als ein auf die Eigendiagnose ausgerichteter Betrieb) das autonome Erheben von Messdaten erfolgen, durch welche es der Werkstatt erleichtert wird, Rückschlüsse auf die Fehlerursache zu ziehen. Die Erhebung der Messdaten ist ggf. vergleichbar mit einer entsprechenden Messwerterfassung bei Prüffahrten, wie sie üblicherweise bei Fahrzeugen durchgeführt werden. Die aus der Eigendiagnose abgeleiteten Erkenntnisse (z. B. ein bevorstehender Reparaturbedarf) ermöglichen es vorteilhafterweise, Werkstattkapazitäten, Ersatzteilbeschaffung, und dergleichen effizienter zu planen. Damit kann auch die Verfügbarkeit des Fahrzeuges zu Transportzwecken steigen.

Unter einem autonomen Fahrzeug wird ein (reales) selbstfahrendes Fahrzeug, vorzugsweise Kraftfahrzeug, insbesondere gleisloses Landkraftfahrzeug, z. B. als ein Personenkraftfahrzeug und/oder Lastkraftfahrzeug, verstanden. Dieses kann (zumindest teil- und/oder zeitweise) ohne Einfluss eines menschlichen Fahrers fahren, steuern und/oder einparken. Entsprechend kann das Fahrzeug auch ohne Lenkrad, Brems- und/oder Gaspedal ausgeführt sein. Ferner ist es bei Ausführungsformen von autonomen Fahrzeugen vorgesehen, dass das Fahrzeug von außerhalb des Fahrzeuges, z. B. durch über eine externe Datenverarbeitungsanlage und/oder über Funk, gesteuert wird. Diese Steuerung umfasst bspw. auch die Anpassung des Fahrverhaltens und/oder eine Routenermittlung zur Navigation. Dabei ist es möglich, dass ein transportorientierter Betrieb des Fahrzeuges genutzt wird, um wenigstens einen Insassen und/oder eine Last zu transportieren. Die Routenermittlung und/oder das Fahrverhalten kann dabei ggf. durch wenigstens einen Insassen, also dem Benutzer des Fahrzeuges, beeinflusst werden. So ist es ggf. in der Standardbetriebsart möglich, dass der Benutzer für die Routenermittlung einen bestimmten Zielort angibt, oder für das Fahrverhalten angibt, dass bestimmte Routenkriterien (z. B. Ausschluss von Autobahnen, Auswahl zwischen der kürzesten oder der schnellsten Strecke, Festlegen einer Geschwindigkeitsbegrenzung, oder dergleichen) genutzt werden. Es kann möglich sein, dass in der Diagnosebetriebsart diese Routenkriterien durch die Eigendiagnose festgelegt werden.

Es kann bei dem erfindungsgemäßen Verfahren vorgesehen sein, dass zur Durchführung der Eigendiagnose vorausgesetzt wird, dass wenigstens eine Freigabebedingung erfüllt ist. Die Freigabebedingung umfasst bspw. wenigstens eine Vorgabe für wenigstens einen Eingangsparameter. Beispielhaft seien einige Varianten für Freigabebedingungen angegeben:
- eine Temperatur des Fahrzeuges, z. B. eine Kühlwassertemperatur, muss einen bestimmten Grenzwert unterschreiten,
- es muss eine bestimmte zeitliche Dauer einer Standzeit des Fahrzeuges eingehalten bzw. überschritten sein,
- es muss eine bestimmte Betriebsdauer des Fahrzeuges überschritten sein,
- es muss wenigstens ein vorgegebenes Routenkriterium erfüllt sein,
- es muss eine Leerfahrt und/oder eine Nichtnutzung für eine Transportfahrt des Fahrzeuges vorliegen,
- es muss eine Umgebungsbedingung erfüllt sein (z. B. eine Außentemperatur muss einen bestimmten Grenzwert über- oder unterschreiten oder es muss ein bestimmtes Wetterkriterium vorliegen).

Entsprechend kann der Eingangsparameter eine Temperatur des Fahrzeuges und/oder eine zeitliche Dauer der Standzeit und/oder eine Betriebsdauer (z. B. seit der ersten Inbetriebnahme des Fahrzeuges) und/oder ein Routenkriterium und/oder ein Umgebungsparameter des Fahrzeuges, wie eine Außentemperatur, und/oder dergleichen sein.

Ferner kann es gemäß einer vorteilhaften Weiterbildung des erfindungsgemäßen Verfahrens vorgesehen sein, dass in der Standardbetriebsart als transportorientierter Betrieb des autonomen Fahrzeuges die Erfüllung der wenigstens einen Freigabebedingung eine geringe Gewichtung erhält, somit also nicht oder nur passiv für den Betrieb des Fahrzeuges berücksichtigt wird. Der Betrieb des Fahrzeuges kann in diesem Fall zumindest überwiegend oder ausschließlich auf Basis eines Benutzer- (Insassen-)wunsches durchgeführt werden, welcher bspw. die Routenkriterien vorgibt. Beinhaltet dann z. B. eine hierbei ermittelte Route auch solche Streckenabschnitte, bei denen die für die Eigendiagnose wenigstens eine erforderliche Freigabebedingung erfüllt ist, so kann die Eigendiagnose ggf. auch in der Standardbetriebsart dennoch durchgeführt werden (andernfalls nicht). Auch ist es vorteilhaft, wenn in der Standardbetriebsart das Fahrverhalten nicht aktiv zu Diagnosezwecken für die Eigendiagnose angepasst wird.

Hingegen kann in der Diagnosebetriebsart der Betrieb des Fahrzeuges mit hoher Gewichtung (also insbesondere aktiv) für die Eigendiagnose angepasst werden, sodass die Erfüllung (und ggf. sogar die aktive Herbeiführung der Erfüllung) der wenigstens einen Freigabebedingung eine hohe Gewichtung erhält. Die unterschiedliche Gewichtung bezieht sich dabei auf einen Umfang, in dem die Freigabebedingung für den Betrieb des Fahrzeuges berücksichtigt wird. So kann in der Diagnosebetriebsart die Freigabebedingung die Routenermittlung dominieren. Dabei können bspw. Fahrziel und Fahrzeit von untergeordneter Bedeutung sein und/oder die Strecke ausschließlich für die Eigendiagnose zusammengestellt werden. Auch kann das Fahrverhalten vorrangig zur Erfüllung der Freigabebedingung und/oder zur Durchführung der Eigendiagnose dienen, sofern die äußeren Randbedingungen wie die Verkehrssituation und/oder Straßenverhältnisse und/oder Verkehrsrichtlinien es zulassen. Die Eigendiagnose kann somit einen Betrieb des Fahrzeuges im öffentlichen Straßenverkehr und somit unter realen Bedingungen umfassen.

Ferner kann die unterschiedliche Gewichtung auch umfassen, dass eine Gewichtung von Eingangsgrößen für die Routenberechnung und für das Fahrverhalten bei der Standardbetriebsart und der Diagnosebetriebsart unterschiedlich sind. So kann bspw. während einer transportorientierten Fahrt nur abschnittsweise das Fahrverhalten zu Gunsten einer Eigendiagnose angepasst werden, und/oder in der Diagnosebetriebsart vollständig das Fahrverhalten zu Gunsten der Eigendiagnose angepasst werden.

Es kann in Ausführungsformen der Erfindung vorgesehen sein, dass die Eigendiagnose erst bei Vorliegen eines vorgegebenen Systemzustands des Fahrzeuges durchgeführt wird, und vorzugsweise das Fahrzeug in der Standardbetriebsart derart betrieben wird, dass passiv das Vorliegen des vorgegebenen Systemzustands überwacht wird, um die Eigendiagnose zu initiieren, und bevorzugt das Fahrzeug in der Diagnosebetriebsart derart betrieben wird, dass aktiv der vorgegebene Systemzustand zur Initiierung der Eigendiagnose herbeigeführt wird. Zur aktiven Herbeiführung kann z. B. eine für die Eigendiagnose angepasste Route zur Fahrzeugnavigation bestimmt und/oder autonom befahren werden und/oder ein Fahrzeugstillstand definierter Dauer bewirkt werden, und zur passiven Überwachung kann ggf. eine berechnete Route auf die Eignung für die Eigendiagnose überprüft werden und/oder ein vorliegender Fahrzeugstillstand hinsichtlich der für die Eigendiagnose notwendigen Dauer (Standdauer) überprüft werden, z. B. durch die Fahrzeugelektronik. Der vorgegebene Systemzustand wird dabei bspw. durch eine Vorgabe für wenigstens eine Freigabebedingung definiert. Bspw. muss eine Kombination von bestimmten Freigabebedingungen vorliegen, damit die Eigendiagnose durchgeführt werden kann. Somit wird gewährleistet, dass die dabei ermittelten Daten spezifisch sind für einen zu untersuchenden Zustand des Fahrzeuges.

In einer Gruppe von Ausführungsformen ist vorgesehen, dass das Fahrzeug ein Navigationssystem zur Ermittlung einer Route aufweist, wobei die Ermittlung der Route in der Standardbetriebsart zumindest überwiegend anhand eines Insassenwunsches und in der Diagnosebetriebsart zumindest überwiegend anhand wenigstens einer Freigabebedingung für die Eigendiagnose durchgeführt wird, wobei vorzugsweise in der Diagnosebetriebsart die Eigendiagnose stets und in der Standardbetriebsart nur bei Vorliegen der Freigabebedingung durchgeführt wird. Der Insassenwunsch kann dabei bspw. durch eine Eingabevorrichtung, wie durch ein Touchscreen oder eine Spracheingabe oder dergleichen, dem Fahrzeug mitgeteilt werden. Es kann auch möglich sein, dass die Diagnosebetriebsart nur dann aktiviert wird, wenn das Fahrzeug die Abwesenheit von Insassen und/oder einer Last detektiert. In diesem Fall liegt kein Transport vor, sodass die Eigendiagnose den Normalbetrieb nicht beeinträchtigen kann.

Es ist möglich, dass in der Standardbetriebsart das autonom fahrende Fahrzeug seine Routenführung, also die Ermittlung und/oder Anpassung der Route, abhängig von Eingangsparametern wie Fahrziel, Verkehrssituation, Energieeffizienz und/oder Fahrzeit durchführt. Ein Ziel einer Routenberechnung zur Ermittlung bzw. Anpassung der Route kann es dabei sein, ein zeitliches und/oder energetisches Optimum zu finden. Erfindungsgemäß kann es möglich sein, dass wenigstens eine Freigabebedingung (Freigaberandbedingung) für die Eigendiagnose mit variabler Gewichtung in die Routenführung einfließt. Die Eigendiagnose ist z. B. als ein nichtkontinuierliches Diagnoseverfahren ausgeführt, sodass die Durchführung von der Gewichtung abhängen kann. Vorzugsweise kann dabei die Routenführung eine Berechnung von einem Streckenprofil und/oder die Berechnung des Fahrverhaltens umfassen. In anderen Worten kann die Freigabebedingung mit unterschiedlicher Gewichtung für die Standardbetriebsart und die Diagnosebetriebsart bei dem Betrieb des Fahrzeuges, vorzugsweise für die Bestimmung des Fahrverhaltens und/oder der Ermittlung bzw. Anpassung der Route, berücksichtigt werden. So ist es bspw. hinsichtlich der Gewichtung möglich, dass bei einer höchsten Gewichtung (z. B. in der Diagnosebetriebsart) die Freigabebedingung aktiv herbeigeführt wird, und bei einer geringsten Gewichtung (z. B. in der Standardbetriebsart) ausschließlich passiv abgewartet wird, dass die Freigabebedingung vorliegt. Es ist hierbei ebenfalls optional vorgesehen, dass zwischen diesen beiden extremen Gewichtungen auch Zwischenstufen vorgesehen sind, bei welchem die Freigabebedingung z. B. nur teilweise beeinflusst wird.

Von weiterem Vorteil kann vorgesehen sein, dass die Eigendiagnose wenigstens in Abhängigkeit von einer Freigabebedingung für ein Fahrverhalten durchgeführt wird, wobei vorzugsweise in der Diagnosebetriebsart das Fahrzeug aktiv, und bevorzugt fahrzeugintern gesteuert, das Fahrverhalten auf die Eigendiagnose anpasst. Das Fahrverhalten kann dabei bspw. Vorgaben für die Auswahl von Routen und/oder die Anpassung der Geschwindigkeit und/oder dergleichen umfassen. Besonders vorteilhaft ist es ferner für bestimmte Diagnosen, dass das Fahrverhalten auch in Abhängigkeit von der Eigendiagnose angepasst wird, also zur erfolgreichen Durchführung der Eigendiagnose ein bestimmtes Fahrverhalten vorgegeben ist. Dies kann damit zusammenhängen, dass bei der Eigendiagnose Messwerte erfasst werden, welche für das bestimmte Fahrverhalten spezifisch sind, und für welche z. B. Vergleichswerte vorliegen. Wenn die Messwerte dann nicht mit den Vergleichswerten (innerhalb einer Toleranz) übereinstimmen, obwohl das bestimmte Fahrverhalten eingestellt war, kann auf einen Fehler bei dem Fahrzeug geschlossen werden.

Außerdem kann es in Ausführungsformen der Erfindung von Vorteil sein, dass eine Umschaltung von der Standardbetriebsart auf die Diagnosebetriebsart aktiv von außerhalb des Fahrzeuges initiiert wird. Diese Umschaltung kann bspw. vor einem geplanten Werkstattaufenthalt erfolgen, um bereits Diagnosen und Routinen zur Eigendiagnose des Fahrzeuges durchlaufen zu lassen, und somit konkrete Informationen über das Fahrzeug zu erhalten. Damit kann die Effizienz und der zeitliche Aufwand verbessert werden, da solche Informationen bereits vor dem Werkstattaufenthalt ermittelt werden können. Hierbei kann es vorteilhaft auch möglich sein, dass die Umschaltung bedingt erfolgt, z. B. nur dann, wenn ein transportorientierter Betrieb zum Transport eines Insassen nicht oder nur mit geringer Priorität vorgesehen ist. Bspw. kann die Umschaltung auch durch die Initiierung eingeplant werden, sodass die Umschaltung erst dann erfolgt, wenn solche Bedingungen für die Umschaltung vorliegen.

Des Weiteren kann es möglich sein, dass eine (ggf. auch eingeplante) Umschaltung von der Standardbetriebsart auf die Diagnosebetriebsart und/oder umgekehrt intern im Fahrzeug auf Grundlage von Eingangsparametern initialisiert wird und/oder extern über ein per Funk- und/oder Kabelübertragung eingebrachtes Signal initialisiert wird. Bspw. können Vorgaben festgelegt werden, wie bestimmte Grenzwerte für die Temperatur und/oder eine Standdauer des Fahrzeuges. Wenn nun durch das Fahrzeug erfasste Eingangsparameter, wie die Standdauer, eine bestimmte Grenze überschreiten, kann die Initialisierung durch das Fahrzeug selbst erfolgen. Damit wird gewährleistet, dass ein transportorientierter Betrieb nicht beeinträchtigt wird und gleichzeitig die Eigendiagnose zuverlässig durchgeführt werden kann. Es wird also der Vorteil erzielt, dass die Initiierung nur dann erfolgt, wenn das Fahrzeug nicht anderweitig z. B. für den transportorientierten Betrieb genutzt wird. Vorteilhafterweise kann nur in der Diagnosebetriebsart das Fahrzeug dediziert für die Eigendiagnose betrieben werden.

Des Weiteren kann vorgesehen sein, dass eine Umschaltung von der Standardbetriebsart auf die Diagnosebetriebsart (insbesondere nur) dann erfolgt, wenn eine Nichtnutzung des Fahrzeuges für einen Transport detektiert wird. Diese Detektion kann dabei bevorzugt durch Insassensensoren ermöglicht werden, welche die Anwesenheit von Insassen detektieren. Auch kann eine Anforderung und/oder eine Planung eines transportorientierten Betriebs vorgesehen sein, sodass bei Ausbleiben dieser Anforderung und/oder anhand der Planung Zeitabschnitte ohne Transport (die Nichtnutzung) detektiert werden können.

Es kann optional möglich sein, dass zur Eigendiagnose wenigstens einer der nachfolgenden Schritte durchgeführt wird, wobei die Schritte vorzugsweise nacheinander oder in beliebiger Reihenfolge durchgeführt werden:
- Erfassen wenigstens eines Eingangsparameters des Fahrzeuges, um ein Erfassungsergebnis zu bestimmen,
- Auswerten des Erfassungsergebnisses anhand einer Freigabebedingung, um festzustellen, ob die Freigabebedingung erfüllt ist, insbesondere durch einen Vergleich wenigstens eines Wertes und/oder Wertebereiches für die Freigabebedingung mit dem Erfassungsergebnis,
- Durchführen einer diagnosespezifischen Ansteuerung wenigstens eines Aktors des Fahrzeuges, wenn die Freigabebedingung erfüllt ist,
- Durchführen wenigstens einer Messung am Fahrzeug, um wenigstens eine Diagnoseinformation zu bestimmen, welche für die Ansteuerung spezifisch ist, vorzugsweise während und/oder nach der Ansteuerung, bspw. bei Erreichen einer vorgegebenen Zeitdauer nach der Ansteuerung,
- Auswerten und/oder Speichern der Diagnoseinformation, um einen Fahrzeugzustand anhand der Diagnoseinformation zu bewerten.

Bspw. kann dabei der Aktor ein Aktor eines Kühlsystems sein, wie z. B. eine Pumpe oder ein Ventil. In diesem Fall kann die Messung als eine Temperaturmessung einer Temperatur hinter einem Kühler des Fahrzeuges ausgeführt sein. Weiter ist es denkbar, dass der Aktor als eine weitere Fahrzeugkomponente (z. B. eine Antriebskomponente, eine Bremse oder dergleichen) ausgeführt ist, um so die entsprechend zugehörigen Systemkomponenten zu prüfen. Die Eigendiagnose kann dabei auf der Überlegung beruhen, dass ein definierter Zustand des Fahrzeuges im Normalfall zu bekannten Erfassungsergebnissen führt. Wenn das Erfassungsergebnis, z. B. ein Messwert, nicht mit dem bekannten Erfassungsergebnis übereinstimmt, kann hingegen auf einen Fehler geschlossen werden.

Ferner ist es optional vorgesehen, dass die Eigendiagnose als nichtkontinuierliches Diagnoseverfahren nur bei Vorliegen wenigstens einer Freigabebedingung, insbesondere einem bestimmten Systemzustand und/oder einer bestimmten Fahrzeugsituation, durchgeführt wird, wobei vorzugsweise in der Standardbetriebsart zusätzlich zur Eigendiagnose ein kontinuierliches Diagnoseverfahren unabhängig von der wenigstens einen Freigabebedingung, insbesondere permanent, durchgeführt wird. Das kontinuierliche Diagnoseverfahren kann sich dabei derart von dem nichtkontinuierlichen Diagnoseverfahren unterscheiden, dass das kontinuierliche Diagnoseverfahren auch (insbesondere ohne Einschränkungen mit sich zu bringen) im transportorientierten Betrieb durchgehend durchgeführt werden kann. Es muss in anderen Worten nicht erst ein bestimmter Fahrzeugzustand aktiv herbeigeführt werden. Bspw. kann das kontinuierliche Diagnoseverfahren auch dazu dienen, Unregelmäßigkeiten beim Fahrzeug festzustellen, was dann die Initiierung der Diagnosebetriebsart bewirkt, um eine aussagekräftigere und/oder umfangreichere Diagnose durchzuführen.

Gemäß einer vorteilhaften Weiterbildung der Erfindung kann vorgesehen sein, dass die Eigendiagnose als eine interne Diagnose des Fahrzeuges durchgeführt wird, um vorzugsweise interne Fehlerzustände von wenigstens einem Bauteil und/oder Teilsystem des Fahrzeuges zu ermitteln, wobei bevorzugt eine Umschaltung in die Diagnosebetriebsart intern durch das Fahrzeug durchgeführt wird, vorzugsweise in Abhängigkeit von einer Vorgabe für eine Diagnosehäufigkeit und/oder einem zeitlichen Abstand zu einer in der Vergangenheit durchgeführten Eigendiagnose und/oder einem Ergebnis eines kontinuierlichen Diagnoseverfahrens.

Ebenfalls Gegenstand der Erfindung ist ein autonomes Fahrzeug. Hierbei ist vorgesehen, dass das Fahrzeug eine Fahrzeugelektronik aufweist, welche zur Bereitstellung einer Standardbetriebsart zur Durchführung eines transportorientierten Betriebs des Fahrzeuges dient, bei welchem eine Eigendiagnose mit einer ersten Gewichtung durchgeführt wird. Ferner kann die Fahrzeugelektronik zur Bereitstellung einer Diagnosebetriebsart zur Durchführung der Eigendiagnose mit einer zweiten Gewichtung, welche höher ist als die erste Gewichtung, ausgeführt sein. Damit bringt das erfindungsgemäße autonome Fahrzeug die gleichen Vorteile mit sich, wie sie ausführlich mit Bezug auf ein erfindungsgemäßes Verfahren beschrieben worden sind. Das autonome Fahrzeug ist ausgelegt, gemäß einem erfindungsgemäßen Verfahren betrieben zu werden. Insbesondere ist wenigstens eine Vorrichtung zur Datenverarbeitung, wie ein Prozessor mit einem Datenspeicher, bei dem autonomen Fahrzeug vorgesehen, wobei die Vorrichtung Mittel zur Ausführung der Schritte eines erfindungsgemäßen Verfahrens aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Fig. 1: eine schematische Darstellung eines Fahrzeuges in einer Seitenansicht,
- Fig. 2: eine schematische Darstellung zur Visualisierung eines erfindungsgemäßen Verfahrens,
- Fig. 3: eine weitere schematische Darstellung zur Visualisierung eines erfindungsgemäßen Verfahrens.

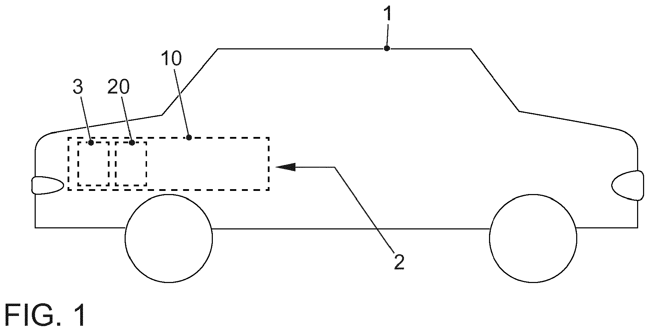

In Figur 1 ist schematisch ein Fahrzeug 1 dargestellt, welches als erfindungsgemäßes autonomes Fahrzeug 1 ausgeführt sein kann. Das Fahrzeug 1 umfasst dabei wenigstens einen Aktor 2. Ferner ist eine Fahrzeugelektronik 10 vorgesehen, die z. B. ein Navigationssystem 3 und/oder eine Steuerungsvorrichtung 20 umfasst. Die genannten Strukturen können dabei zur Durchführung einer Eigendiagnose 115 genutzt werden, wie nachfolgend näher beschrieben ist.

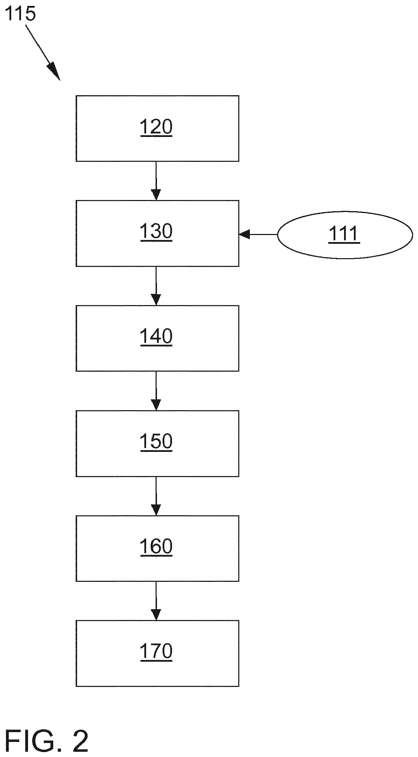

Es wird beispielhaft anhand Figur 2 die Durchführung der Eigendiagnose 115 bei einem Kühlsystem des Fahrzeuges 1 beschrieben. Selbstverständlich ist das erfindungsgemäße Verfahren 100 nicht auf die Nutzung bei einem Kühlsystem beschränkt. Zunächst kann zur Eigendiagnose 115 erforderlich sein, dass eine Erfassung 120 eines aktuellen Fahrzeugzustandes durchgeführt wird. Dieser kann in einer ersten Auswertung 130 mit ein oder mehreren Freigabebedingungen 111 verglichen werden, um festzustellen, ob ein definierter Fahrzeugzustand vorliegt. Es ist möglich, dass als Freigabebedingung 111 eine bestimmte Fahrzeug- und/oder Kühlwassertemperatur oder dergleichen unterschritten sein muss und/oder das Fahrzeug 1 für eine Mindestzeitdauer stillsteht. In anderen Worten kann die Freigabebedingung 111 erfordern, dass das Fahrzeug 1 in einen definierten Ausgangszustand überführt wird. Sobald die Freigabebedingung 111 erfüllt ist, kann zur Eigendiagnose 115 die Fahrzeugelektronik 10, insbesondere die Steuerungsvorrichtung 20, wenigstens einen Aktor 2 des Fahrzeuges 1 ansteuern. Der Aktor 2 ist bspw. ein Ventil des Kühlsystems, um das Kühlsystem durch diese Ansteuerung 140 in einen definierten Betrieb zu überführen.

Anschließend kann eine Messung 150 erfolgen, z. B. einer Temperatur hinter dem Kühler. Dabei basiert dieses Vorgehen auf der Erkenntnis, dass ausgehend von dem definierten Fahrzeugzustand der definierte Betrieb bei einer ordnungsgemäßen Funktionalität des Systems des Fahrzeuges 1 das Fahrzeug 1 derart beeinflusst, dass sich wenigstens ein Messwert der Messung 150 (Zielwert) vorhersagen lässt, welcher den Rückschluss auf die ordnungsgemäße Funktionalität zulässt. In gleicher Weise kann anhand einer Abweichung des Messwertes ein Fehler diagnostiziert werden. Der wenigstens eine Messwert der Messung 150 bildet dabei die wenigstens eine Diagnoseinformation. Es ist ferner möglich, dass die entsprechende Überprüfung des Messwertes intern im Fahrzeug 1 oder extern anhand einer Aufzeichnung des Messwertes erfolgt, wobei ggf. auch ein Toleranzbereich für den Zielwert berücksichtigt wird, um einen fehlerhaften Zustand festzustellen. Die Diagnoseinformation kann entsprechend auch gespeichert werden (Verfahrensschritt 160), um anschließend eine zweite Auswertung 170 der Diagnoseinformation zu ermöglichen.

Ein weiteres Beispiel für eine Eigendiagnose 115 ist, dass das Fahrzeug 1 zunächst gemäß einer Freigabebedingung 111 für eine bestimmte Zeitdauer stillstehen muss (z. B. mindestens 4 Stunden). Anschließend kann es vorgesehen sein, dass (gemäß einer Ansteuerung 140 wenigstens eines Aktors 2) das Fahrzeug 1 für eine bestimmte Zeitdauer und/oder in definierter Weise fahren muss, z. B. für mindestens 20 Minuten und/oder mit im Wesentlichen 30 km / h. Anschließend kann eine Messung 150 erfolgen, z. B. einer Temperatur am Fahrzeug 1 oder dergleichen, um eine Diagnoseinformation zu erhalten.

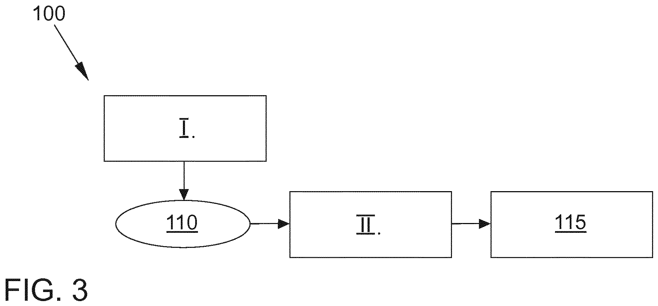

In Figur 3 ist gezeigt, dass ausgehend von der Standardbetriebsart I die Umschaltung 110 in die Diagnosebetriebsart II möglich ist, um die Eigendiagnose 115 mit hoher Priorität durchzuführen. Insbesondere ist die Standardbetriebsart I dabei die normale Betriebsart, welche also überwiegend bei dem Fahrzeug 1 aktiviert ist (z. B. zu mindestens 99 %). Die Diagnosebetriebsart II bildet entsprechend einen Ausnahmezustand, welcher z. B. vor Werkstattbesuchen oder dergleichen genutzt wird.

Die voranstehende Erläuterung der Ausführungsformen beschreibt die vorliegende Erfindung ausschließlich im Rahmen von Beispielen.

### Bezugszeichenliste

- 1: Fahrzeug, autonomes Fahrzeug
- 2: Aktor
- 3: Navigationssystem

- 10: Fahrzeugelektronik

- 20: Steuerungsvorrichtung

- 100: Verfahren
- 110: Umschaltung
- 111: Freigabebedingung
- 115: Eigendiagnose

- 120: Erfassung
- 130: erste Auswertung

- 140: Ansteuerung
- 150: Messung

- 160: Speicherung
- 170: zweite Auswertung

- I: Standardbetriebsart
- II: Diagnosebetriebsart

## Patentansprüche

1. Verfahren (100) zur Durchführung einer Eigendiagnose (115) eines autonomen Fahrzeuges (1),
**wobei die nachfolgenden Schritte durchgeführt werden:**
- Betreiben des Fahrzeuges (1) gemäß einer Standardbetriebsart (I) für einen transportorientierten Betrieb des Fahrzeuges (1), bei welcher die Eigendiagnose (115) gemäß einer ersten Gewichtung automatisiert durchgeführt wird,
- Betreiben des Fahrzeuges (1) gemäß einer Diagnosebetriebsart (II), bei welcher die Eigendiagnose (115) mit einer zweiten Gewichtung automatisiert durchgeführt wird, wobei die zweite Gewichtung höher ist als die erste Gewichtung,
wobei sich die erste und zweite Gewichtung auf eine Priorität und/oder auf einen Umfang der Eigendiagnose und/oder auf eine Berechtigung, welche der Eigendiagnose hinsichtlich der Beeinflussung des Fahrbetriebs zukommt, bezieht und wobei sich die erste Gewichtung von der zweiten Gewichtung derart unterscheiden, dass in der Standardbetriebsart (I) der transportorientierte Betrieb Vorrang hat und/oder nicht eingeschränkt wird, und in der Diagnosebetriebsart (II) der transportorientierte Betrieb nur in der Weise durchgeführt werden kann, dass die Eigendiagnose möglich ist.

2. Verfahren (100) nach Anspruch 1,
**dadurch gekennzeichnet,**
**dass** die Eigendiagnose (115) erst bei Vorliegen eines vorgegebenen Systemzustands des Fahrzeuges (1) durchgeführt wird, und
das Fahrzeug (1) in der Standardbetriebsart (I) derart betrieben wird, dass passiv das Vorliegen des vorgegebenen Systemzustands überwacht wird, um die Eigendiagnose (115) zu initiieren, und
das Fahrzeug (1) in der Diagnosebetriebsart (II) derart betrieben wird, dass aktiv der vorgegebene Systemzustand zur Initiierung der Eigendiagnose (115) herbeigeführt wird.

3. Verfahren (100) nach Anspruch 1 oder 2,
**dadurch gekennzeichnet,**
**dass** das Fahrzeug (1) ein Navigationssystem (3) zur Ermittlung einer Route aufweist, wobei die Ermittlung der Route in der Standardbetriebsart (I) zumindest überwiegend anhand eines Insassenwunsches und in der Diagnosebetriebsart (II) zumindest überwiegend anhand wenigstens einer Freigabebedingung (111) für die Eigendiagnose (115) durchgeführt wird, wobei in der Diagnosebetriebsart (II) die Eigendiagnose (115) stets und in der Standardbetriebsart (I) nur bei Vorliegen der Freigabebedingung (111) durchgeführt wird.

4. Verfahren (100) nach einem der vorhergehenden Ansprüche,
**dadurch gekennzeichnet,**
**dass** die Eigendiagnose (115) wenigstens in Abhängigkeit von einer Freigabebedingung (111) für ein Fahrverhalten durchgeführt wird, wobei in der Diagnosebetriebsart (II) das Fahrzeug (1) aktiv, und vorzugsweise fahrzeugintern gesteuert, das Fahrverhalten auf die Eigendiagnose (115) anpasst.

5. Verfahren (100) nach einem der vorhergehenden Ansprüche,
**dadurch gekennzeichnet,**
**dass** eine Umschaltung (110) von der Standardbetriebsart (I) auf die Diagnosebetriebsart (II) aktiv von außerhalb des Fahrzeuges (1) initiiert wird.

6. Verfahren (100) nach einem der vorhergehenden Ansprüche,
**dadurch gekennzeichnet,**
**dass** eine Umschaltung (110) von der Standardbetriebsart (I) auf die Diagnosebetriebsart (II) dann erfolgt, wenn eine Nichtnutzung des Fahrzeuges (1) für einen Transport detektiert wird.

7. Verfahren (100) nach einem der vorhergehenden Ansprüche,
**dadurch gekennzeichnet,**
**dass** zur Eigendiagnose (115) der nachfolgende Ablauf durchgeführt wird:
- Erfassen (120) wenigstens eines Eingangsparameters des Fahrzeuges (1), um ein Erfassungsergebnis zu bestimmen,
- Auswerten (130) des Erfassungsergebnisses anhand einer Freigabebedingung (111), um festzustellen, ob die Freigabebedingung (111) erfüllt ist,
- Durchführen einer diagnosespezifischen Ansteuerung (140) wenigstens eines Aktors (2) des Fahrzeuges (1), wenn die Freigabebedingung (111) erfüllt ist,
- Durchführen wenigstens einer Messung (150) am Fahrzeug (1), um wenigstens eine Diagnoseinformation zu bestimmen, welche für die Ansteuerung (140) spezifisch ist,
- Auswerten (170) und/oder Speichern (160) der Diagnoseinformation, um einen Fahrzeugzustand anhand der Diagnoseinformation zu bewerten.

8. Verfahren (100) nach einem der vorhergehenden Ansprüche,
**dadurch gekennzeichnet,**
**dass** die Eigendiagnose (115) als nichtkontinuierliches Diagnoseverfahren nur bei Vorliegen wenigstens einer Freigabebedingung (111), insbesondere einem bestimmten Systemzustand und/oder einer bestimmten Fahrzeugsituation, durchgeführt wird, wobei vorzugsweise in der Standardbetriebsart (I) zusätzlich zur Eigendiagnose (115) ein kontinuierliches Diagnoseverfahren unabhängig von der wenigstens einen Freigabebedingung (111) durchgeführt wird.

9. Verfahren (100) nach einem der vorhergehenden Ansprüche,
**dadurch gekennzeichnet,**
**dass** die Eigendiagnose (115) als eine interne Diagnose des Fahrzeuges (1) durchgeführt wird, um interne Fehlerzustände von wenigstens einem Bauteil und/oder Teilsystem des Fahrzeuges (1) zu ermitteln, wobei eine Umschaltung (110) in die Diagnosebetriebsart (II) intern durch das Fahrzeug (1) durchgeführt wird, vorzugsweise in Abhängigkeit von einer Vorgabe für eine Diagnosehäufigkeit und/oder einem zeitlichen Abstand zu einer in der Vergangenheit durchgeführten Eigendiagnose (115).

10. Autonomes Fahrzeug (1), mit einer Fahrzeugelektronik (10) zur Bereitstellung einer Standardbetriebsart (I) zur Durchführung eines transportorientierten Betriebs des Fahrzeuges (1), bei welchem eine Eigendiagnose (115) mit einer ersten Gewichtung durchgeführt wird, und zur Bereitstellung einer Diagnosebetriebsart (II) zur Durchführung der Eigendiagnose (115) mit einer zweiten Gewichtung, welche höher ist als die erste Gewichtung, wobei das Fahrzeug ausgelegt ist, nach dem Verfahren nach einem der vorhergehenden Ansprüche betrieben zu werden.

## Claims

1. Method (100) for carrying out a self-diagnosis (115) of an automated vehicle (1),
**wherein the following steps are carried out:**
- operating the vehicle (1) in a standard operating mode (I) for transport-oriented operation of the vehicle (1), in which the self-diagnosis (115) is carried out automatically according to a first weighting,
- operating the vehicle (1) in a diagnosis operating mode (II), in which the self-diagnosis (115) is carried out automatically using a second weighting, wherein the second weighting is greater than the first weighting,
wherein the first and second weighting relate to a priority and/or to a scope of the self-diagnosis and/or to an authorization that the self-diagnosis has with regard to influencing the driving operation, and wherein the first weighting differs from the second weighting such that transport-oriented operation has priority and/or is not restricted in the standard operating mode (I) and transport-oriented operation can only be carried out in the diagnosis operating mode (II) in such a way that self-diagnosis is possible.

2. Method (100) according to claim 1,
**characterized in that**
the self-diagnosis (115) is only carried out when a predetermined system state of the vehicle (1) is present, and
the vehicle (1) is operated in the standard operating mode (I) such that the presence of the predetermined system state is passively monitored in order to initiate the self-diagnosis (115), and
the vehicle (1) is operated in the diagnosis operating mode (II) such that the predetermined system state for initiating the self-diagnosis (115) is actively brought about.

3. Method (100) according to either claim 1 or claim 2,
**characterized in that**
the vehicle (1) has a navigation system (3) for determining a route, the route being determined in the standard operating mode (I) at least predominantly on the basis of an occupant's request and being determined in the diagnosis operating mode (II) at least predominantly on the basis of at least one release condition (111) for the self-diagnosis (115), the self-diagnosis (115) always being carried out in the diagnosis operating mode (II) and only being carried out in the standard operating mode (I) if the release condition (111) is present.

4. Method (100) according to any of the preceding claims,
**characterized in that**
the self-diagnosis (115) is carried out at least as a function of a release condition (111) for a driving behavior, the vehicle (1) actively adapting the driving behavior to the self-diagnosis (115) in the diagnosis operating mode (II), and preferably in a manner controlled internally in the vehicle.

5. Method (100) according to any of the preceding claims,
**characterized in that**
a switchover (110) from the standard operating mode (I) to the diagnosis operating mode (II) is actively initiated from outside the vehicle (1).

6. Method (100) according to any of the preceding claims,
**characterized in that**
a switchover (110) from the standard operating mode (I) to the diagnosis operating mode (II) takes place when non-use of the vehicle (1) for transport is detected.

7. Method (100) according to any of the preceding claims,
**characterized in that**
the following sequence is carried out for the self-diagnosis (115):
- detecting (120) at least one input parameter of the vehicle (1) in order to determine a detection result,
- evaluating (130) the detection result on the basis of a release condition (111) in order to determine whether the release condition (111) is met,
- carrying out diagnosis-specific actuation (140) of at least one actuator (2) of the vehicle (1) when the release condition (111) is met,
- carrying out at least one measurement (150) on the vehicle (1) in order to determine at least one piece of diagnostic information which is specific for the actuation (140),
- evaluating (170) and/or storing (160) the diagnostic information in order to assess a vehicle condition on the basis of the diagnostic information.

8. Method (100) according to any of the preceding claims,
**characterized in that**
the self-diagnosis (115) is only carried out as a non-continuous diagnostic method when at least one release condition (111) is present, in particular a specific system state and/or a specific vehicle situation, a continuous diagnostic method preferably being carried out in the standard operating mode (I) in addition to the self-diagnosis (115) independently of the at least one release condition (111).

9. Method (100) according to any of the preceding claims,
**characterized in that**
the self-diagnosis (115) is carried out as an internal diagnosis of the vehicle (1) in order to determine internal error states of at least one component and/or subsystem of the vehicle (1), a switchover (110) to the diagnosis operating mode (II) being carried out internally by the vehicle (1), preferably depending on a specification for a diagnosis frequency and/or a time interval from a self-diagnosis (115) carried out in the past.

10. Automated vehicle (1), having vehicle electronics (10) for providing a standard operating mode (I) for carrying out transport-oriented operation of the vehicle (1), in which a self-diagnosis (115) is carried out using a first weighting, and for providing a diagnosis operating mode (II) for carrying out the self-diagnosis (115) using a second weighting which is greater than the first weighting, wherein the vehicle is designed to be operated according to the method according to any of the preceding claims.

## Revendications

1. Procédé (100) permettant la réalisation d'un autodiagnostic (115) d'un véhicule (1) autonome,
**dans lequel les étapes suivantes sont réalisées** :
- mise en fonctionnement du véhicule (1) selon un mode de fonctionnement standard (I) destiné à un fonctionnement orienté vers le transport du véhicule (1), dans lequel l'autodiagnostic (115) est réalisé de manière automatisée selon une première pondération,
- mise en fonctionnement du véhicule (1) selon un mode de fonctionnement de diagnostic (II), dans lequel l'autodiagnostic (115) est réalisé de manière automatisée avec une seconde pondération, dans lequel la seconde pondération est supérieure à la première pondération,
dans lequel la première et la seconde pondération se rapportent à une priorité et/ou à une étendue de l'autodiagnostic et/ou à une autorisation, lesquelles reviennent à l'autodiagnostic en ce qui concerne l'influence du fonctionnement de conduite, et dans lequel la première pondération se distingue de la seconde pondération de telle sorte que, dans le mode de fonctionnement standard (I), le fonctionnement orienté vers le transport prévaut et/ou n'est pas restreint, et, dans le mode de fonctionnement de diagnostic (II), le fonctionnement orienté vers le transport ne peut être réalisé que de manière telle que l'autodiagnostic est possible.

2. Procédé (100) selon la revendication 1,
**caractérisé en ce que**
l'autodiagnostic (115) n'est réalisé qu'en présence d'un état de système prédéfini du véhicule (1), et
le véhicule (1) fonctionne dans le mode de fonctionnement standard (I) de telle sorte que la présence de l'état de système prédéfini est surveillée passivement afin d'initier l'autodiagnostic (115), et
le véhicule (1) fonctionne dans le mode de fonctionnement de diagnostic (II) de telle sorte que l'état de système prédéfini est provoqué activement pour l'initiation de l'autodiagnostic (115).

3. Procédé (100) selon la revendication 1 ou 2,
**caractérisé en ce que**
le véhicule (1) présente un système de navigation (3) permettant de définir un itinéraire, dans lequel la définition de l'itinéraire est réalisée, dans le mode de fonctionnement standard (I), au moins principalement au moyen d'un souhait de l'occupant et, dans le mode de fonctionnement de diagnostic (II), au moins principalement au moyen d'au moins une condition de libération (111) destinée à l'autodiagnostic (115), dans lequel, dans le mode de fonctionnement de diagnostic (II), l'autodiagnostic (115) est toujours réalisé et, dans le mode de fonctionnement standard (I), est réalisé uniquement en présence de la condition de libération (111).

4. Procédé (100) selon l'une des revendications précédentes,
**caractérisé en ce que**
l'autodiagnostic (115) est réalisé au moins en fonction d'une condition de libération (111) destinée à un comportement de conduite, dans lequel, dans le mode de fonctionnement de diagnostic (II), le véhicule (1) adapte activement, et de préférence de manière commandée et interne au véhicule, le comportement de conduite à l'autodiagnostic (115).

5. Procédé (100) selon l'une des revendications précédentes,
**caractérisé en ce que**
une commutation (110) du mode de fonctionnement standard (I) au mode de fonctionnement de diagnostic (II) est initiée activement depuis l'extérieur du véhicule (1).

6. Procédé (100) selon l'une des revendications précédentes,
**caractérisé en ce que**
une commutation (110) du mode de fonctionnement standard (I) au mode de fonctionnement de diagnostic (II) est effectuée lorsqu'une non-utilisation du véhicule (1) pour un transport est détectée.

7. Procédé (100) selon l'une des revendications précédentes,
**caractérisé en ce que**
le déroulement suivant est réalisé pour l'autodiagnostic (115) :
- saisie (120) d'au moins un paramètre d'entrée du véhicule (1) afin de déterminer un résultat de saisie,
- analyse (130) du résultat de saisie au moyen d'une condition de libération (111) afin d'établir si la condition de libération (111) est remplie,
- réalisation d'une commande (140) spécifique au diagnostic d'au moins un actionneur (2) du véhicule (1) lorsque la condition de libération (111) est remplie,
- réalisation d'au moins une mesure (150) sur le véhicule (1) afin de déterminer au moins une information de diagnostic qui est spécifique à la commande (140),
- analyse (170) et/ou mémorisation (160) de l'information de diagnostic afin d'évaluer un état de véhicule au moyen de l'information de diagnostic.

8. Procédé (100) selon l'une des revendications précédentes,
**caractérisé en ce que**
l'autodiagnostic (115) n'est réalisé en tant que procédé de diagnostic non continu qu'en présence d'au moins une condition de libération (111), en particulier d'un état de système déterminé et/ou d'une situation de véhicule déterminée, dans lequel, de préférence, dans le mode de fonctionnement standard (I), en plus de l'autodiagnostic (115), un procédé de diagnostic continu est réalisé indépendamment de l'au moins une condition de libération (111).

9. Procédé (100) selon l'une des revendications précédentes,
**caractérisé en ce que**
l'autodiagnostic (115) est réalisé en tant que diagnostic interne du véhicule (1) afin de définir des états d'erreur internes d'au moins un composant et/ou sous-système du véhicule (1), dans lequel une commutation (110) vers le mode de fonctionnement de diagnostic (II) est réalisée de manière interne par le véhicule (1), de préférence en fonction d'une consigne destinée à une fréquence de diagnostic et/ou d'un intervalle de temps par rapport à un autodiagnostic (115) réalisé par le passé.

10. Véhicule (1) autonome, comportant une électronique de véhicule (10) permettant de fournir un mode de fonctionnement standard (I) permettant de réaliser un fonctionnement orienté vers le transport du véhicule (1), dans lequel un autodiagnostic (115) est réalisé avec une première pondération, et permettant de fournir un mode de fonctionnement de diagnostic (II) permettant de réaliser l'autodiagnostic (115) avec une seconde pondération qui est supérieure à la première pondération, dans lequel le véhicule est configuré pour fonctionner selon le procédé selon l'une des revendications précédentes.
